# EUROPEAN PATENT APPLICATION

(11) **EP 3 763 491 A1**
(43) Date of publication of application: **13.01.2021**
(21) Application number: 19764164.0
(22) Date of filing: 04.03.2019
(51) Int. Cl.: B25J 11/00, A61H 1/02

(54) **MOTION ASSIST DEVICE**

(30) Priority: 09.03.2018 JP 2018043104
(71) Applicant: Panasonic Corporation, Osaka 571-8501 (JP)
(72) Inventor: KONISHI, Makoto, Osaka-shi, Osaka 540-6207 (JP); MATSUMOTO, Seiya, Osaka-shi, Osaka 540-6207 (JP); MATSUMOTO, Ikuyo, Osaka-shi, Osaka 540-6207 (JP); HABASAKI, Shohei, Osaka-shi, Osaka 540-6207 (JP); IWAI, Yuya, Osaka-shi, Osaka 540-6207 (JP); MORIKAWA, Fumitaka, Osaka-shi, Osaka 540-6207 (JP); MIYACHI, Ryo, Osaka-shi, Osaka 540-6207 (JP)
(74) Representative: Eisenführ Speiser
(86) International application number: PCT/JP2019/008481
(87) International publication number: WO 2019/172209

(57) **Abstract**

A movement assistance device (1) includes: a first fitting member (10) which is fitted onto the torso; a second fitting member (20) and a third fitting member (30) which are fitted onto both legs; and a power mechanism (40) which includes a first end connected to the first fitting member (10) and a second end connected to the second fitting member (20) and the third fitting member (30) and generates a tensile force between the first end and the second end. The power mechanism (40) includes: a string-shaped first power transmitter (410) connected to the second fitting member (20) and the third fitting member (30); a first sliding mechanism (421) which is positioned between (i) the first fitting member (10) and (ii) the second fitting member (20) and the third fitting member (30) and around which a third portion (413) is wound; an actuator (430) which generates a tensile force between at least one end of the first power transmitter (410) and the second fitting member (20) and the third fitting member (30).

## Description

### TECHNICAL FIELD

The present invention relates to a movement assistance device which assists the movement of a wearer by reducing the force required for the movement.

### BACKGROUND ART

Patent Literature (PTL) 1 discloses a walking aid in which the ends of a wire are connected to the left and right legs of a wearer. In the walking aid, a motor is rotated in one direction so that the end of the wire connected to the left leg or the right leg is pulled while the other end of the wire is pushed forward, whereas the motor is rotated in the other direction so that the end of the wire connected to the left leg or the right leg is pushed forward while the other end of the wire is pulled.

### Citation List

### Patent Literature

PTL 1: Japanese Unexamined Patent Application Publication No. 2016-202580

### SUMMARY OF THE INVENTION

### TECHNICAL PROBLEMS

However, the conventional technique has a problem that while one of the ends of the wire is being pulled, the other end is pushed forward, and thus, it is difficult to effectively assist a plurality of parts of the body of the wearer at the same time.

In addition, if the conventional technique is to be used to effectively assist a plurality of parts of the body of the wearer at the same time, a large number of motors are required, leading to a problem of an increased weight of the device or an increased manufacturing cost.

In view of the above, the present invention provides a movement assistance device which is capable of assisting a plurality of parts of the body of a wearer at the same time with a simple configuration.

### SOLUTION TO PROBLEMS

A movement assistance device according to one aspect of the present invention includes: a first fitting member which is fitted onto a first part of a body of a person; a second fitting member which is fitted onto a second part of the body, and a third fitting member which is fitted onto a third part of the body, the second part and the third part being positioned opposite to the first part across a joint; and a power mechanism which includes a first end connected to the first fitting member and a second end connected to the second fitting member and the third fitting member, the power mechanism generating a tensile force between the first end and the second end. The power mechanism includes: a first power transmitter connected to the second fitting member and the third fitting member, the first power transmitter having a string shape; a first sliding mechanism which is positioned between (i) the first fitting member and (ii) the second fitting member and the third fitting member, and around which a third portion of the first power transmitter is wound, the third portion being positioned between a first portion and a second portion of the first power transmitter, the first portion being connected to the second fitting member, the second portion being connected to the third fitting member; and an actuator which generates the tensile force one of (i) between the first sliding mechanism and the first fitting member, (ii) between at least one end of the first power transmitter and the first fitting member, and (iii) between at least one end of the first power transmitter, the second fitting member, and the third fitting member.

### ADVANTAGEOUS EFFECT OF INVENTION

The movement assistance device according to the present invention is capable of assisting a plurality of parts of the body of the wearer at the same time with a simple configuration.

### BRIEF DESCRIPTION OF DRAWINGS

FIG. 1 is an external view of a movement assistance device worn by a wearer seen from behind.
FIG. 2 schematically illustrates a specific configuration of a power mechanism.
FIG. 3 schematically illustrates a detailed configuration of a guide mechanism.
FIG. 4 illustrates an operation of the movement assistance device according to Embodiment 1.
FIG. 5 is a view of a movement assistance device according to Embodiment 2 seen from behind.
FIG. 6 is a view of a movement assistance device according to Embodiment 3 seen from behind.
FIG. 7 is a view of a movement assistance device according to Embodiment 4 seen from behind.

### DESCRIPTION OF EXEMPLARY EMBODIMENTS

In order to realize the movement assistance device, a movement assistance device according to one aspect of the present invention includes: a first fitting member which is fitted onto a first part of a body of a person; a second fitting member which is fitted onto a second part of the body, and a third fitting member which is fitted onto a third part of the body, the second part and the third part being positioned opposite to the first part across a joint; and a power mechanism which includes a first end connected to the first fitting member and a second end connected to the second fitting member and the third fitting member, the power mechanism generating a tensile force between the first end and the second end. The power mechanism includes: a first power transmitter connected to the second fitting member and the third fitting member, the first power transmitter having a string shape; a first sliding mechanism which is positioned between (i) the first fitting member and (ii) the second fitting member and the third fitting member, and around which a third portion of the first power transmitter is wound, the third portion being positioned between a first portion and a second portion of the first power transmitter, the first portion being connected to the second fitting member, the second portion being connected to the third fitting member; and an actuator which generates the tensile force one of (i) between the first sliding mechanism and the first fitting member, (ii) between at least one end of the first power transmitter and the first fitting member, and (iii) between at least one end of the first power transmitter, the second fitting member, and the third fitting member.

With the above aspect, the first power transmitter of the power mechanism includes a first portion connected to the second fitting member, a second portion connected to the third fitting member, and a third portion between the first portion and the second portion. The third portion is wound around the first sliding mechanism. Accordingly, a tensile force is generated by the actuator in the power mechanism. When the tensile force is largely distributed to one of the second fitting member and the third fitting member, the first sliding mechanism moves toward the one of the second fitting member and the third fitting member to which a less tensile force has been distributed in the lengthwise direction of the first power transmitter. Hence, the power mechanism is capable of distributing the tensile force evenly to the second fitting member and the third fitting member. As a result, it is possible to prevent a force from being preferentially applied to one of the second fitting member and the third fitting member relative to the first fitting member, and is capable of assisting a plurality of parts of the body of the wearer at the same time effectively. Since one actuator is capable of assisting a plurality of parts of the body of the wearer at the same time, the weight of the device and the manufacturing cost can be reduced.

Moreover, it may be that the power mechanism further includes: a second sliding mechanism which is disposed in the second fitting member, and around which the first portion of the first power transmitter is wound; and a third sliding mechanism which is disposed in the third fitting member, and around which the second portion of the first power transmitter is wound. It may be that the actuator is fixed to the first fitting member and the at least one end of the first power transmitter, and generates the tensile force between the at least one end of the first power transmitter, the second fitting member, and the third fitting member by pulling the at least one end of the first power transmitter.

With this, since the second sliding mechanism and the third sliding mechanism is capable of acting as moving pulleys, the work efficiency of the assist to the plurality of parts of the body of the wearer can be equalized effectively.

Moreover, it may be that the power mechanism further includes: a second power transmitter including a first end fixed to the first sliding mechanism and a second end fixed to the actuator, the second power transmitter having a string shape, the first power transmitter includes a first end fixed to the second fitting member and a second end fixed to the third fitting member, and the actuator is disposed in the first fitting member, and generates the tensile force between the first sliding mechanism and the first fitting member by pulling the second end of the second power transmitter.

Moreover, it may be that the power mechanism further includes: a guide mechanism disposed between (i) the actuator and (ii) the second fitting member and the third fitting member, the guide mechanism including a through-hole through which the first power transmitter passes.

With this, since the first power transmitter passes through the through-holes of the guide mechanisms, the first power transmitter is disposed along a predetermined line formed by the through-holes. Accordingly, it is possible to effectively apply the tensile force generated by the actuator to the first power transmitter.

Moreover, it may be that the guide mechanism includes: a support which supports a back side of the body; and a protrusion which protrudes from the support toward the back side, and the through-hole passes through the protrusion in an up and down direction.

With this, the through-holes through which the first power transmitter passes are disposed in the protrusions protruding from the support, which supports the back of the human, toward the back side. Hence, when a tensile force is applied to the first power transmitter, a force can be effectively applied to the direction in which the back warps. Therefore, it is possible to effectively assist the force required for the movement of extending the back when the person stands up from the state where the person is crouching down. As a result, for example, it is possible to effectively assist the force required for the movement of extending the back in the movement of the person standing up while learning forward and holding a package or the like.

Moreover, it may be that a plurality of the protrusions are aligned in the up and down direction, each of the plurality of the protrusions includes the through-hole, and the first power transmitter passes through a plurality of the through-holes.

With this, the first power transmitter passes through a plurality of protrusions. Hence, when a tensile force is applied to the first power transmitter, such a force that arranges the protrusions linearly can be applied to the back. In other words, it is possible to effectively assist the force required for the movement from the posture in which the person is leaning forward and curling the back to the posture in which the back is straightened.

Moreover, it may be that a plurality of the supports are aligned in the up and down direction, and each of the plurality of the protrusions is disposed on a different one of the plurality of the supports.

For this reason, the guide mechanism can be easily deformed along the shape of the back of the person. Hence, it is possible to effectively assist the force required for the person to straighten the back.

Moreover, it may be that the first fitting member is fitted onto a torso of the body as the first part, the second fitting member is fitted onto a right leg as the second part, and the third fitting member is fitted onto a left leg as the third part, and the power mechanism is disposed on a back side of the body.

Moreover, it may be that the first sliding mechanism is disposed on a waist of the body, and the actuator is disposed above the first sliding mechanism.

Hereinafter, movement assistance device 1 according to an aspect of the present invention will be specifically described with reference to the drawings.

Note that the embodiments described below each show a specific example of the present invention. The numerical values, shapes, materials, structural elements, the arrangement and connection of the structural elements, etc., indicated in the following embodiments are mere examples, and therefore do not intend to limit the prevent invention. Therefore, among the structural elements in the following embodiments, those not recited in any of the independent claims defining the most generic concept are described as optional structural elements.

### (Embodiment 1)

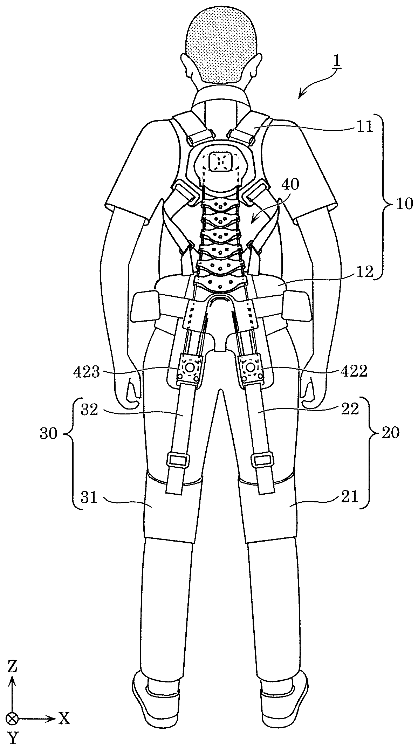

A movement assistance device according to Embodiment 1 will be described with reference to FIG. 1 to FIG. 4.

### [1-1. Configuration]

In the present embodiment, in the state where a movement assistance device is being worn by a wearer, the left and right direction of the wearer is represented by the X-axis direction, the front and back direction of the wearer is represented by the Y-axis direction, and the up and down direction of the wearer is represented by the Z-axis direction. Moreover, the left side of the wearer is represented by the negative X-axis side, and the right side of the wearer is represented by the positive X-axis side. Moreover, the front side of the wearer is represented by the positive Y-axis side, and the back side of the wearer is represented by the negative Y-axis side. Moreover, the top side of the wearer is represented by the positive Z-axis side, and the bottom side of the wearer is represented by the negative Z-axis side. In the drawings, the directions indicated by the arrows indicating the X-axis, the Y-axis, and the Z-axis are defined as the positive sides of the respective directions, and the directions opposite to the arrows are defined as the negative sides of the respective directions. The same definitions of the directions also apply to other embodiments, too.

FIG. 1 is an external view of the movement assistance device worn by the wearer seen from behind.

As illustrated in FIG. 1, movement assistance device 1 includes first fitting member 10, second fitting member 20, third fitting member 30, and power mechanism 40.

First fitting member 10 is a member fitted onto a first part of a body of a person. Specifically, first fitting member 10 is fitted onto the torso of the body of the person. First fitting member 10 includes, for example, shoulder belts 11 fitted onto both shoulders of the body of the person, and waist belt 12 fitted around the waist of the torso. Shoulder belts 11 and waist belt 12 are band-shaped members, and are made of, for example, synthetic fiber, natural fiber, metal fiber, leather (including artificial leather), or silicone.

Second fitting member 20 and third fitting member 30 are members which are respectively fitted onto a second part and a third part of the body of the person. The second part and the third part are located opposite to the first part across a joint. Specifically, second fitting member 20 and third fitting member 30 are fitted onto the right leg and the left leg of the body of the person, respectively. Second fitting member 20 includes leg belt 21 fitted onto the right leg, and extension belt 22 fixed to leg belt 21 and extending upward from leg belt 21. Third fitting member 30 includes leg belt 31 fitted onto the left leg, and extension belt 32 fixed to leg belt 31 and extending upward from leg belt 31. The right leg and the left leg are located opposite to the torso across joints, such as hip joints. Leg belts 21 and 31 are fitted onto the positions below the knee joints, for example, onto the lower legs. Leg belts 21 and 31 do not have to be fitted onto the lower legs, but may be fitted ono the thighs. Leg belt 21 and extension belt 32 are band-shaped members, and are made of, for example, synthetic fiber, natural fiber, metal fiber, leather (including artificial leather), or silicone.

Power mechanism 40 includes, in the Z-axis direction, a first end connected to first fitting member 10 and a second end connected to second fitting member 20 and third fitting member 30. Power mechanism 40 generates a tensile force between the first end and the second end. Specifically, power mechanism 40 is arranged on the back side of the body of the person. The first end portion of power mechanism 40 is fixed to shoulder belts 11 and waist belt 12 of first fitting member 10, and the second end portion of power mechanism 40 is fixed to the upper end of extension belt 22 of second fitting member 20 and the upper end of extension belt 32 of third fitting member 30. Accordingly, for example, when the wearer moves from a posture in which the wearer bends over from the waist to a posture in which the wearer extends the back, power mechanism 40 is capable of applying a force in a direction in which the back is extended by generating a tensile force. Hence, power mechanism 40 is capable of generating a force for assisting the movement of extending the back.

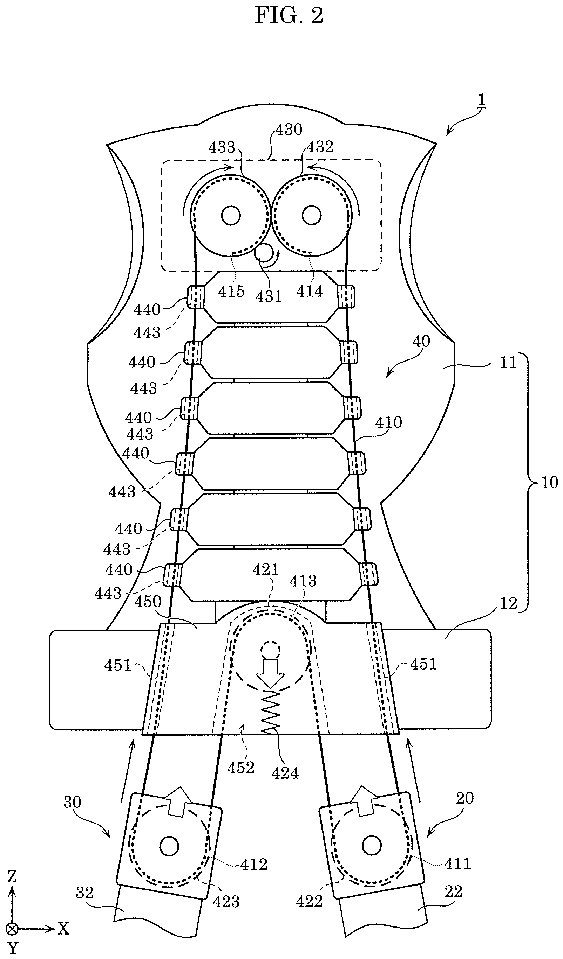

A specific configuration of power mechanism 40 will be described with reference to FIG. 2.

FIG. 2 schematically illustrates a specific configuration of the power mechanism. FIG. 2 illustrates a specific configuration of the power mechanism in movement assistance device 1 of FIG. 1, and does not necessarily provide precise illustrations.

As illustrated in FIG. 2, power mechanism 40 includes first power transmitter 410, first sliding mechanism 421, second sliding mechanism 422, third sliding mechanism 423, actuator 430, and guide mechanisms 440 and 450.

First power transmitter 410 is a string-shaped member. First power transmitter 410 is, for example, a member such as a wire, a belt, or a chain. First power transmitter 410 is connected to second fitting member 20 and third fitting member 30. First power transmitter 410 is disposed ranging from the first end to the second end of power mechanism 40. Accordingly, first power transmitter 410 is capable of transmitting the tensile force generated in power mechanism 40 from the first end to the second end of power mechanism 40 in the Z-axis direction.

First sliding mechanism 421 is positioned between (i) first fitting member 10 and (ii) second fitting member 20 and third fitting member 30. Third portion 413 of first power transmitter 410 is wound around first sliding mechanism 421. Third portion 413 is a portion of first power transmitter 410 between first portion 411 and second portion 412. First portion 411 is a portion of first power transmitter 410 and is connected to second fitting member 20, and second portion 412 is a portion of first power transmitter 410 and is connected to third fitting member 30. Specifically, first sliding mechanism 421 is disposed in guide mechanism 450 fixed to waist belt 12 of first fitting member 10, that is, on the waist of the body of the person. First sliding mechanism 421 is, for example, a pulley which rotates about a predetermined rotation axis. The predetermined rotation axis of first sliding mechanism 421 is, for example, a rotation axis along the Y-axis in a state where movement assistance device 1 is worn by a wearer who is in a standing position. Third portion 413 of first power transmitter 410 is wound around the upper side surface of first sliding mechanism 421. Note that the term "wound around" includes not only the state being wound around the side surface of the pulley one or more times, but also includes the state being wound around only part of the side surface of the pulley.

The rotation axis of first sliding mechanism 421 is slidable in internal space 452 of guide mechanism 450 in the up and down direction. First sliding mechanism 421 may be biased upward by spring 424.

Second sliding mechanism 422 is disposed in second fitting member 20. First portion 411 of first power transmitter 410 is wound around second sliding mechanism 422. First portion 411 is a portion between first end 414 and third portion 413 of first power transmitter 410. Specifically, second sliding mechanism 422 is disposed at the upper end portion of extension belt 22 of second fitting member 20. Second sliding mechanism 422 is, for example, a pulley which rotates about a predetermined rotation axis. The predetermined rotation axis of second sliding mechanism 422 is, for example, in a similar manner to the above, a rotation axis along the Y-axis in a state where movement assistance device 1 is worn by the wearer who is in a standing position. First portion 411 of first power transmitter 410 is wound around the lower side surface of second sliding mechanism 422. Second sliding mechanism 422 is connected to extension belt 22 at a predetermined position on the upper end portion of extension belt 22 such that the predetermined rotation axis of second sliding mechanism 422 does not move. In other words, the predetermined rotation axis of second sliding mechanism 422 is fixed at a predetermined position on the upper end portion of extension belt 22.

Third sliding mechanism 423 is disposed in third fitting member 30. Second portion 412 of first power transmitter 410 is wound around third sliding mechanism 423. Second portion 412 is a portion between second end 415 and third portion 413 of first power transmitter 410. Specifically, third sliding mechanism 423 is disposed at the upper end portion of extension belt 32 of third fitting member 30. Third sliding mechanism 423 is, for example, a pulley which rotates about a predetermined rotation axis. The predetermined rotation axis of third sliding mechanism 423 is, for example, in a similar manner to the above, a rotation axis along the Y-axis in a state where movement assistance device 1 is worn by the wearer who is in a standing position. Second portion 412 of first power transmitter 410 is wound around the lower side surface of third sliding mechanism 423. Third sliding mechanism 423 is connected to extension belt 32 at a predetermined position on the upper end portion of extension belt 32 such that the predetermined rotation axis of third sliding mechanism 423 does not move. In other words, the predetermined rotation axis of third sliding mechanism 423 is fixed at a predetermined position on the upper end portion of extension belt 32.

First sliding mechanism 421, second sliding mechanism 422, and third sliding mechanism 423 are mechanisms which permit the contact position between first power transmitter 410 and each of first sliding mechanism 421, second sliding mechanism 422, and third sliding mechanism 423 to be changed to a different position in the length-wise direction of first power transmitter 410. In other words, first power transmitter 410 is capable of moving, that is, sliding in the length-wise direction of first power transmitter 410 with respect to sliding mechanisms 421 to 423. It has been described that each of sliding mechanisms 421 to 423 is, for example, a pulley. However, each of sliding mechanism 421 to 423 does not have to include a mechanism which rotates about a predetermined rotation axis, unlike the pulley. Another mechanism may be adopted as long as first power transmitter 410 is slidable in the length-wise direction. In the case where first power transmitter 410 is made of a chain, each of sliding mechanisms 421 to 423 may be made of a sprocket having a shape corresponding to the chain.

Actuator 430 is fixed to both ends, that is, first end 414 and second end 415, of first power transmitter 410 and first fitting member 10. Actuator 430 generates a tensile force by pulling the both ends of first power transmitter 410. The portion where actuator 430 generates a tensile force is not limited to the both ends of first power transmitter 410, but may be between (i) first end 414 or second end 415 and (ii) second fitting member 20 and third fitting member 30.

Specifically, actuator 430 includes motor 431, pulley 433 which rotates by rotation of motor 431, and pulley 432 which rotates by rotation of pulley 433. First end 414 of first power transmitter 410 is fixed to pulley 432, and second end 415 of first power transmitter 410 is fixed to pulley 432. Motor 431 and pulley 433 are meshed with each other by a gear (not illustrated). When motor 431 rotates, the rotation of motor 431 is transmitted to pulley 433, so that pulley 433 rotates. In a similar manner, pulley 433 and pulley 432 are meshed with each other by a gear (not illustrated). When pulley 433 rotates, the rotation of pulley 433 is transmitted to pulley 432, so that pulley 432 rotates. In other words, when motor 431 rotates, pulleys 432 and 433 rotate in the direction in which first power transmitter 410 is wound up or the direction in which first power transmitter 410 is wound out. When motor 431 rotates in a first rotational direction, pulleys 432 and 433 rotate in the direction in which the both ends of first power transmitter 410 are wound up. In this way, actuator 430 generates a tensile force on first power transmitter 410 by winding up first power transmitter 410. When motor 431 rotates in a second rotational direction which is opposite to the first rotational direction, pulleys 432 and 433 rotate in the direction in which first power transmitter 410 is wound out. Motor 431 does not have to be driven to rotate in the second rotational direction, but may rotate in the second rotational direction in response to the pulled force generated when first power transmitter 410 is pulled.

Guide mechanisms 440 and 450 are disposed between (i) actuator 430 and (ii) second fitting member 20 and third fitting member 30, and include through-holes 443 and 451 through which first power transmitter 410 passes. Accordingly, guide mechanisms 440 and 450 are capable of guiding first power transmitter 410 so as to pass along a predetermined route (on a predetermined line) even when first power transmitter 410 moves in the length-wise direction. A plurality of guide mechanisms 440 are aligned in the up and down direction. Guide mechanisms 440 are aligned in the up and down direction from the bottom end of actuator 430 with through-holes 443 being arranged in the up and down direction. Guide mechanism 450 is disposed below lowermost guide mechanism 440 of guide mechanisms 440. Guide mechanism 450 is disposed overlapping the rear side of waist belt 12. Guide mechanisms 440 and guide mechanism 450 are connected to each other. Guide mechanisms 440 and guide mechanism 450 are connected to each other by, for example, a flexible member, that is, a member that is easily elastically deformed. Guide mechanisms 440 and 450 are made of, for example, resin or metal.

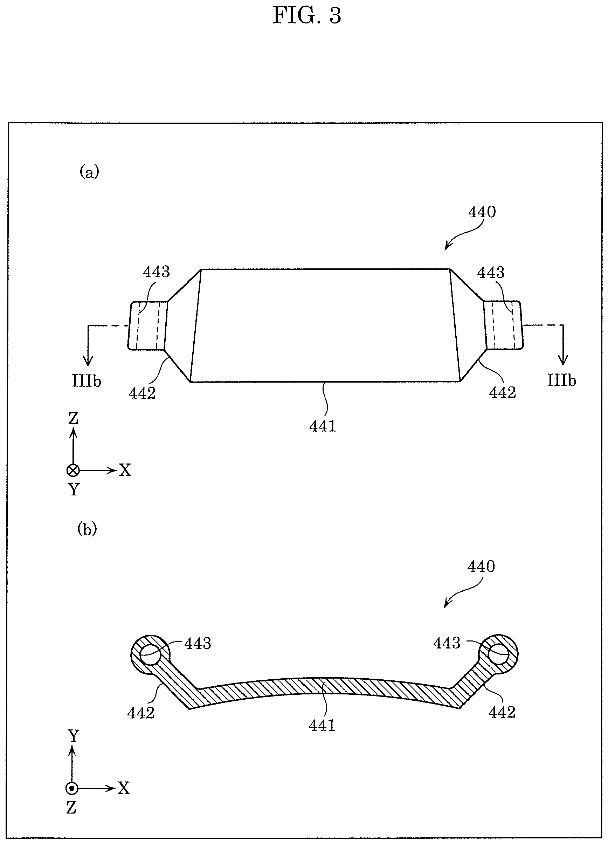

Details of the configuration of each guide mechanism 440 will be described with reference to FIG. 3.

FIG. 3 schematically illustrates a detailed configuration of the guide mechanism. In FIG. 3, (a) is a plan view of one of guide mechanisms 440 seen from behind, and (b) is a cross-sectional view taken along IIIb-IIIb when the plan view in (a) of FIG. 3 is cut along a plane parallel to the XY plane. Note that the size of guide mechanism 440 is smaller as the arrangement position becomes higher, and guide mechanisms 440 are different in size. However, guide mechanisms 440 have the same shape, and thus, one guide mechanism 440 will be described as an example.

As illustrated in FIG. 3, guide mechanism 440 includes support 441 and protrusions 442.

Support 441 is a plate-shaped portion which supports the back side of the body of the wearer. Support 441 is curved along the shape of the back of the body of the wearer. In other words, support 441 has a convex surface curved toward the rear side. It can also be said that support 441 is curved so as to be convex in the direction of the positive Y-axis with respect to the X axis.

Protrusions 442 are portions protruding from support 441 toward the back (positive Y-axis) side. Specifically, protrusions 442 are two portions which protrude from the both ends of support 441 in the X-axis direction to the positive Y-axis side.

Each of protrusions 442 includes through-hole 443. Specifically, through-hole 443 is disposed at the protruding tip of each of two protrusions 442, and passes through protrusion 442 in the up and down direction. Since protrusions 442 are disposed in each of guide mechanisms 440 aligned in the up and down direction, guide mechanisms 440 include a plurality of protrusions 442 aligned in the up and down direction.

Each of protrusions 442 of guide mechanisms 440 has through-hole 443. Through-holes 443 are disposed such that first power transmitter 410 passes through through-holes 443, and through holes 443 overlap with each other when viewed from the direction through which first power transmitter 410 pass. Hence, first power transmitter 410 has such a structure that is capable of easily passing through through-holes 443. Since first power transmitter 410 passes through through-holes 443 of protrusions 442 disposed at both ends of guide mechanisms 440 in the X-axis direction, first power transmitter 410 is arranged at the ends of guide mechanisms 440 on the positive X-axis side and the ends of guide mechanisms 440 on the negative X-axis side.

Referring back to FIG. 2, details of guide mechanism 450 will be described.

Guide mechanism 450 includes through-holes 451 at both ends in the X-axis direction. Through-hole 451 on the negative X-axis side is arranged in the up and down direction overlapping with through-holes 443 of guide mechanisms 440 on the negative X-axis side. First power transmitter 410 passing through through-holes 443 on the negative X-axis side of guide mechanisms 440 passes through through-hole 451 on the negative X-axis side. In a similar manner, through-hole 451 on the positive X-axis side is arranged in the up and down direction overlapping with through-holes 443 of guide mechanisms 440 on the positive X-axis side. First power transmitter 410 passing through through-holes 443 on the positive X-axis side of guide mechanisms passes through through-hole 451 on the positive X-axis side.

Guide mechanism 450 houses first sliding mechanism 421 and spring 424. Guide mechanism 450 includes internal space 452 for housing first sliding mechanism 421 and spring 424. Note that spring 424 does not have to be included. Internal space 452 is positioned between two through-holes 451.

With such a configuration, first power transmitter 410 includes first end 414 fixed to pulley 432 of actuator 430. The portion of first power transmitter 410 between first end 414 and first portion 411 wound around second sliding mechanism 422 passes through through-holes 443 and 451 on the positive X-axis side of guide mechanisms 440 and 450. Moreover, the portion of first power transmitter 410 on the second end 415 side relative to first portion 411 extends to first sliding mechanism 421, and third portion 413 is wound around first sliding mechanism 421. The portion of first power transmitter 410 on the second end 415 side relative to third portion 413 extends to third sliding mechanism 423, and second portion 412 is wound around third sliding mechanism 423. The portion of first power transmitter 410 on the second end 415 side relative to second portion 412 passes through through-holes 443 and 451 on the negative X-axis side of guide mechanisms 440 and 450. Second end 415 of first power transmitter 410 is fixed to pulley 433 of actuator 430.

### [1-2. Operation]

Next, an operation of movement assistance device 1 will be described.

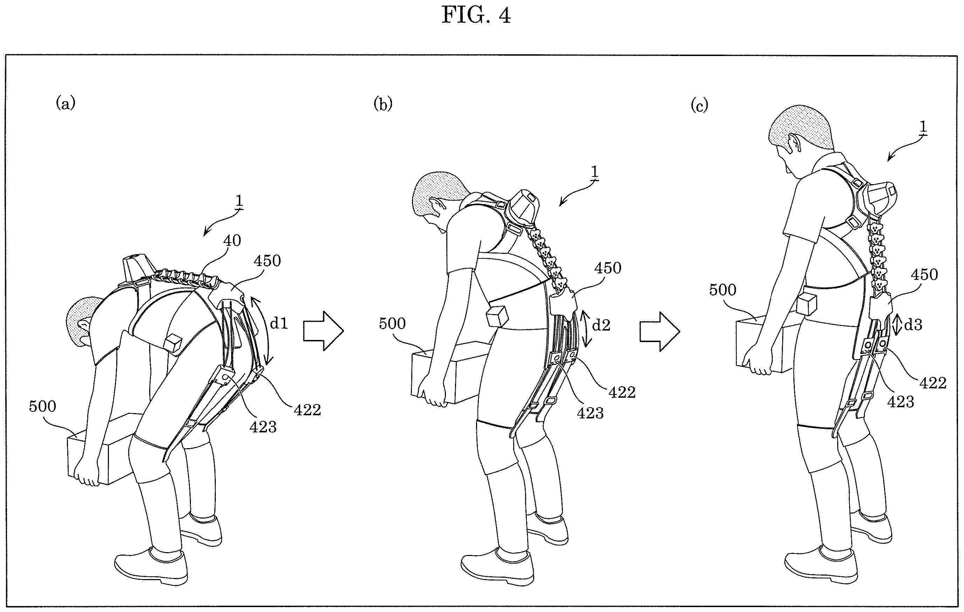

FIG. 4 illustrates an operation of the movement assistance device according to Embodiment 1.

FIG. 4 illustrates an operation of movement assistance device 1 when the wearer performs movement of bending over and lifting package 500.

As illustrated in (a) of FIG. 4, when the wearer leans forward and holds package 500, the back of the wearer is bent, so that the distance between (i) guide mechanism 450 of power mechanism 40 and (ii) second sliding mechanism 422 and third sliding mechanism 423 increases and becomes distance d1. In other words, the length of first power transmitter 410 wound out by actuator 430 becomes a first length.

Next, as illustrated in (b) and (c) of FIG. 4, the wearer extends the back to shift from the leaning forward state to the standing state. At this time, actuator 430 of movement assistance device 1 winds up first power transmitter 410 such that the distance between (i) guide mechanism 450 of power mechanism 40 and (ii) second sliding mechanism 422 and third sliding mechanism 423 changes from distance d1 to distance d2 and from distance d2 to distance d3. Accordingly, the length of first power transmitter 410 wound out by actuator 430 changes from the first length to a second length which is shorter than the first length, and then to a third length which is shorter than the second length. By performing such winding up, movement assistance device 1 assists the movement of extending the back of the wearer. Note that distance d1 is greater than distance d2, and distance d2 is greater than distance d3.

As described above, by actuator 430 winding up first power transmitter 410, as indicated by the white arrows in FIG. 2, a tensile force is applied to first fitting member 10, second fitting member 20, and third fitting member 30 in the direction in which the distance between (i) first sliding mechanism 421 and (ii) second sliding mechanism 422 and third sliding mechanism 423 becomes shorter. Accordingly, it is possible to effectively assist the movement of the wearer lifting package 500.

Actuator 430 may assist the movement of extending the back of the wearer by winding up first power transmitter 410 when a switch (not illustrated) is turned on. In this case, actuator 430 of movement assistance device 1 may be controlled such that actuator 430 does not wind up first power transmitter 410 when the distance between (i) guide mechanism 450 of power mechanism 40 and (ii) second sliding mechanism 422 and third sliding mechanism 423 is less than distance d3. For example, it may be that actuator 430 includes an encoder, and that actuator 430 is controlled not to operate when the length of first power transmitter 410 wound out by actuator 430 is the length corresponding to less than distance d3.

Moreover, it may be that actuator 430 is not operated by the switch as described above. For example, it may be that actuator 430 includes an encoder, and that actuator 430 is controlled to wind up first power transmitter 410 when the length of first power transmitter 410 wound out by actuator 430 exceeds a predetermined amount from the detection result of the encoder. Actuator 430 may also be operated based on a value of a gyro sensor, an acceleration sensor, and the like.

Moreover, actuator 430 may always apply a force to the extent that does not loosen first power transmitter 410.

### [1-3. Advantageous Effects, etc.]

Movement assistance device 1 according to the present embodiment includes first fitting member 10, second fitting member 20, third fitting member 30, and power mechanism 40. First fitting member 10 is a member which is fitted onto the torso of the body of the person. Second fitting member 20 and third fitting member 30 are members which are fitted onto the right leg and the left leg of the person, respectively. Power mechanism 40 includes a first end connected to first fitting member 10 and a second end connected to second fitting member 20 and third fitting member 30. Power mechanism 40 generates a tensile force between the first end and the second end. Power mechanism 40 includes first power transmitter 410, first sliding mechanism 421, and actuator 430. First power transmitter 410 is a string shaped member connected to second fitting member 20 and third fitting member 30. First sliding mechanism 421 is positioned between (i) first fitting member 10 and (ii) second fitting member 20 and third fitting member 30. Third portion 413 of first power transmitter 410 between first portion 411 connected to second fitting member 20 and second portion 412 connected to third fitting member 30 is wound around first sliding mechanism 421. Actuator 430 is connected to both ends of first power transmitter 410 and first fitting member 10, and generates a tensile force between both ends of first power transmitter 410 and first fitting member 10.

Accordingly, in first power transmitter 410 of power mechanism 40, third portion 413 between first portion 411 connected to second fitting member 20 and second portion 412 connected to third fitting member 30 is wound around first sliding mechanism 421. For example, first power transmitter 410 is wound out longer to one of second fitting member 20 and third fitting member 30 when the wearer performs movement of twisting the waist to the right side or the left side while holding package 500. As a result, the tensile force is largely distributed to one of second fitting member 20 and third fitting member 30. As described above, in power mechanism 40, a tensile force is generated by actuator 430. When the tensile force is largely distributed to one of second fitting member 20 and third fitting member 30, first sliding mechanism 421 moves toward the one to which the tensile force of first power transmitter 410 in the length-wise direction is less distributed. Accordingly, power mechanism 40 is capable of equally distributing the tensile force to second fitting member 20 and third fitting member 30. Hence, it is possible to prevent a force from preferentially acting on one of second fitting member 20 and third fitting member 30 relative to first fitting member 10. This allows a plurality of parts of the body of the wearer to be effectively assisted at the same time. Since one actuator 430 is capable of assisting a plurality of parts of the wearer at the same time, the weight of the device and the manufacturing cost can be reduced.

Moreover, in movement assistance device 1 according to the present embodiment, power mechanism 40 further includes second sliding mechanism 422 and third sliding mechanism 423. Second sliding mechanism 422 is disposed in second fitting member 20. First portion 411 of first power transmitter 410 is wound around second sliding mechanism 422. Third sliding mechanism 423 is disposed in third fitting member 30. Second portion 412 of first power transmitter 410 is wound around third sliding mechanism 423. Actuator 430 is fixed to first fitting member 10 and both ends (that is, first end 414 and second end 415) of first power transmitter 410, and generates a tensile force by pulling both ends of first power transmitter 410.

With this, since second sliding mechanism 422 and third sliding mechanism 423 are capable of functioning as moving pulleys, the work efficiency of the assist to a plurality of parts of the body of the wearer can be equalized effectively.

Moreover, in movement assistance device 1 according to the present embodiment, power mechanism 40 further includes guide mechanisms 440 and 450. Guide mechanisms 440 and 450 are disposed between (i) actuator 430 and (ii) second fitting member 20 and third fitting member 30, and include through-holes 443 and 451 through which first power transmitter 410 passes.

With this, first power transmitter 410 passes through through-holes 443 and 451 of guide mechanisms 440 and 450, and thus, first power transmitter 410 is arranged along a predetermined line formed by through-holes 443 and 451. Accordingly, the tensile force generated by actuator 430 can be efficiently applied to first power transmitter 410.

Moreover, in movement assistance device 1 according to the present embodiment, each guide mechanism 440 includes support 441 and protrusions 442. Support 441 is a portion which supports the back side of the body. Each protrusion 442 is a portion protruding from support 441 to the back side. Through-hole 443 passes through protrusion 442 in the up and down direction.

With this, since through-hole 443 through which first power transmitter 410 passes is disposed in each protrusion 442 protruding from support 441, which supports the back of the person, toward the back side, when a tensile force is applied to first power transmitter 410, a force acting in the direction in which the back warps can be effectively applied. Therefore, it is possible to effectively assist the force required for the movement of extending the back when the person stands up from the state where the person is crouching down. As a result, for example, it is possible to effectively assist the force required for the movement of extending the back in the movement of standing up while learning forward and holding a package or the like.

Moreover, in movement assistance device 1 according to the present embodiment, a plurality of protrusions 442 are aligned in the up and down direction. Each of protrusions 442 includes through-hole 443. First power transmitter 410 passes through through-holes 443.

With this, since first power transmitter 410 passes through protrusions 442, such a force that arranges protrusions 442 in a straight line can be applied to the back of the person when a tensile force is applied to first power transmitter 410. In other words, it is possible to effectively assist the force required for the movement from the posture in which the person is leaning forward and curling the back to the posture in which the back is straightened.

Moreover, in movement assistance device 1 according to the present embodiment, a plurality of supports 441 are arranged in the up and down direction. Protrusions 442 are disposed on supports 441. For this reason, guide mechanism 440 can be easily deformed along the shape of the back of the person. Hence, it is possible to effectively assist the force required for the person to straighten the back.

### (Embodiment 2)

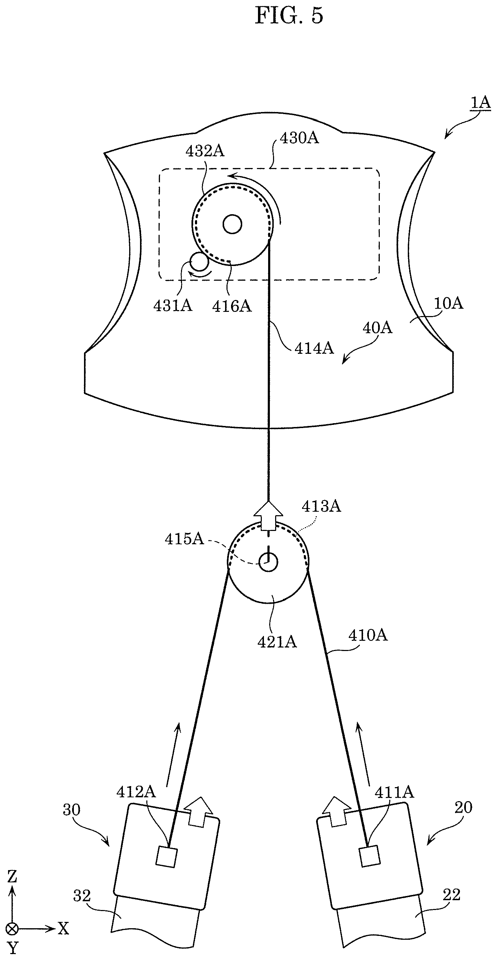

A movement assistance device according to Embodiment 2 will be described with reference to FIG. 5.

### [2-1. Configuration]

FIG. 5 is a view of the movement assistance device according to Embodiment 2 seen from behind.

As illustrated in FIG. 5, movement assistance device 1A according to Embodiment 2 includes first fitting member 10A, second fitting member 20, third fitting member 30, and power mechanism 40A.

First fitting member 10A is different from first fitting member 10A according to Embodiment 1 in that first fitting member 10A does not include waist belt 12. First fitting member 10A may have the same configuration as first fitting member 10 according to Embodiment 1.

Second fitting member 20 and third fitting member 30 have the same configuration as second fitting member 20 and third fitting member 30 according to Embodiment 1, respectively. Hence, detailed description of second fitting member 20 and third fitting member 30 is omitted.

Power mechanism 40A includes first power transmitter 410A, second power transmitter 414A, first sliding mechanism 421A, and actuator 430A.

First power transmitter 410A includes: first portion 411A, which is a first end, fixed to second fitting member 20; and second portion 412A, which is a second end, fixed to third fitting member 30. Specifically, first portion 411A is fixed at the upper end position of extension belt 22 of second fitting member 20, and second portion 412A is fixed at the upper end position of extension belt 32 of third fitting member 30. In first power transmitter 410A, third portion 413A, which is between first portion 411A and second portion 412A, is wound around first sliding mechanism 421A. First power transmitter 410A is a string-shaped member, and is, for example, a member such as a wire, a belt, or a chain.

Second power transmitter 414A is a string-shaped member. Second power transmitter 414A is, for example, a member such as a wire, a belt, or a chain. Second power transmitter 414A includes first end 415A fixed to first sliding mechanism 421A and second end 416A fixed to actuator 430. Specifically, second power transmitter 414A is fixed to the rotation axis of first sliding mechanism 421A. Second power transmitter 414A pulls first sliding mechanism 421A upward upon the application of the tensile force by actuator 430.

First sliding mechanism 421A is different from first sliding mechanism 421 according to Embodiment 1 in that first sliding mechanism 421A is not disposed in first fitting member 10A, but the other configurations are the same. Hence, detailed description of first sliding mechanism 421A is omitted.

Actuator 430A is fixed to second end 416A of second power transmitter 414A and to first fitting member 10A. Actuator 430A generates a tensile force between first sliding mechanism 421A and first fitting member 10A by pulling second end 416A of second power transmitter 414A. Specifically, actuator 430A includes motor 431A and pulley 432A which rotates by the rotation of motor 431A. Second end 416A of second power transmitter 414A is fixed to pulley 432A. Motor 431A and pulley 432A are meshed with each other by a gear (not illustrated). When motor 431A rotates, the rotation of motor 431A is transmitted to pulley 432A, and pulley 432A rotates. In other words, when motor 431A rotates, pulley 432A rotates in the direction in which second power transmitter 414A is wound up or wound out. When motor 431A rotates in a first rotational direction, pulley 432A rotates in the direction in which second power transmitter 414A is wound up. In this way, actuator 430 generates a tensile force on second power transmitter 414A by winding up second power transmitter 414A. When motor 431A rotates in a second rotational direction opposite to the first rotational direction, pulley 432A rotates in the direction in which second power transmitter 414A is wound out. Motor 431A does not have to be driven to rotate in the second rotational direction, and may rotate in the second rotational direction in response to the pulled force generated when first power transmitter 410 is pulled.

### [2-2. Operation]

In a similar manner to movement assistance device 1 according to Embodiment 1, when the wearer leans forward and holds package 500, the back of the wearer is bent, and therefore, the length of second power transmitter 414A wound out by actuator 430A becomes a first length. Then, the wearer extends the back to shift from the leaning forward state to the standing state. Accordingly, the length of second power transmitter 414A wound out by actuator 430A changes from the first length to a second length which is shorter than the first length, and then to a third length which is shorter than the second length. By performing such winding up, movement assistance device 1A assists the movement of extending the back of the wearer.

As described above, when second power transmitter 414A is wound up by actuator 430A, as indicated by the white arrows in FIG. 5, a tensile force is applied to first fitting member 10, second fitting member 20, and third fitting member 30 in the direction in which the distance between first sliding mechanism 421A and actuator 430A becomes shorter. Accordingly, it is possible to assist the movement of the wearer lifting package 500.

### (Embodiment 3)

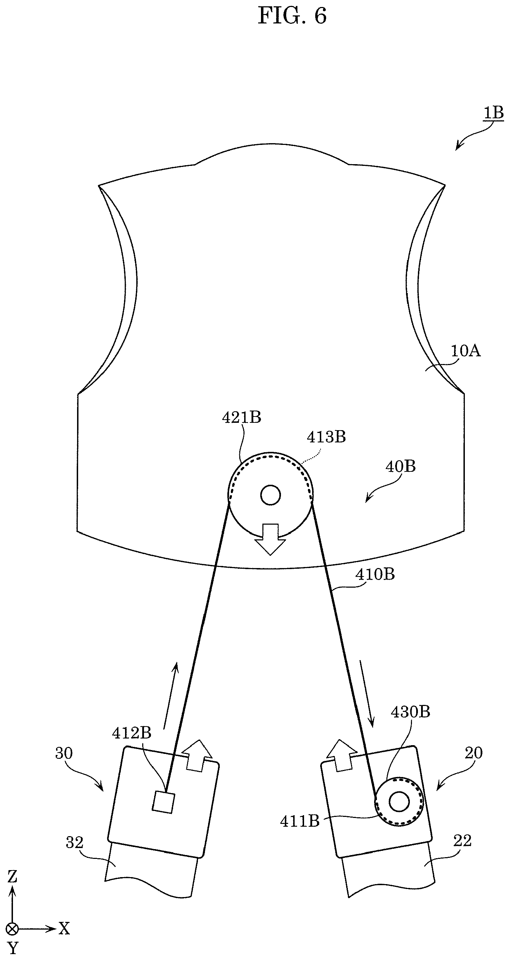

A movement assistance device according to Embodiment 3 will be described with reference to FIG. 6.

### [3-1. Configuration]

FIG. 6 is a view of the movement assistance device according to Embodiment 3 seen from behind.

As illustrated in FIG. 6, movement assistance device 1B according to Embodiment 3 includes first fitting member 10A, second fitting member 20, third fitting member 30, and power mechanism 40B.

First fitting member 10A has the same configuration as the first fitting member according to Embodiment 2. Hence, detailed description of first fitting member 10A is omitted.

Second fitting member 20 and third fitting member 30 have the same configuration as second fitting member 20 and third fitting member 30 according to Embodiment 1. Hence, detailed description of second fitting member 20 and third fitting member 30 is omitted.

Power mechanism 40B includes first power transmitter 410B, first sliding mechanism 421B, and actuator 430B.

First power transmitter 410B is a string-shaped member. First power transmitter 410B is, for example, a member, such as a wire, a belt, or a chain. First power transmitter 410B has: first portion 411B, which is a first end, fixed to actuator 430B of second fitting member 20; and second portion 412B, which is a second end, fixed to third fitting member 30. First power transmitter 410B is wound around first sliding mechanism 421B in third portion 413B which is a portion between first portion 411B and second portion 412B.

Actuator 430B is fixed to first portion 411B of first power transmitter 410B and second fitting member 20, and generates a tensile force by pulling first portion 411B of first power transmitter 410B. Specifically, actuator 430B is a motor. First power transmitter 410B is wound up or wound out as the motor rotates. In other words, actuator 430B generates a tensile force on first power transmitter 410B by winding up first power transmitter 410B. The motor does not have to be driven to rotate in the rotational direction in which first power transmitter 410B is wound out, but may rotate in the direction in which first power transmitter 410B is wound out in response to the pulled force generated when first power transmitter 410B is pulled.

### [3-2. Operation]

In a similar manner to movement assistance device 1A according to Embodiment 2, when the wearer leans forward and holds package 500, the back of the wearer is bent, and therefore, the length of first power transmitter 410B wound out by actuator 430B becomes a first length. Subsequently, the wearer extends the back to shift from the leaning forward state to the standing state. At this time, the length of first power transmitter 410B wound out by actuator 430B changes from the first length to a second length which is shorter than the first length, and then to a third length which is shorter than the second length. By performing such winding up, movement assistance device 1B assists the movement of extending the back of the wearer.

As described above, when first power transmitter 410B is wound up by actuator 430B, as indicated by the white arrows in FIG. 6, a tensile force is applied to first fitting member 10A, second fitting member 20, and third fitting member 30 in the direction in which the distance between (i) first sliding mechanism 421B and (ii) second fitting member 20 and third fitting member 30 becomes shorter. Accordingly, it is possible to assist the movement of the wearer lifting package 500.

### (Embodiment 4)

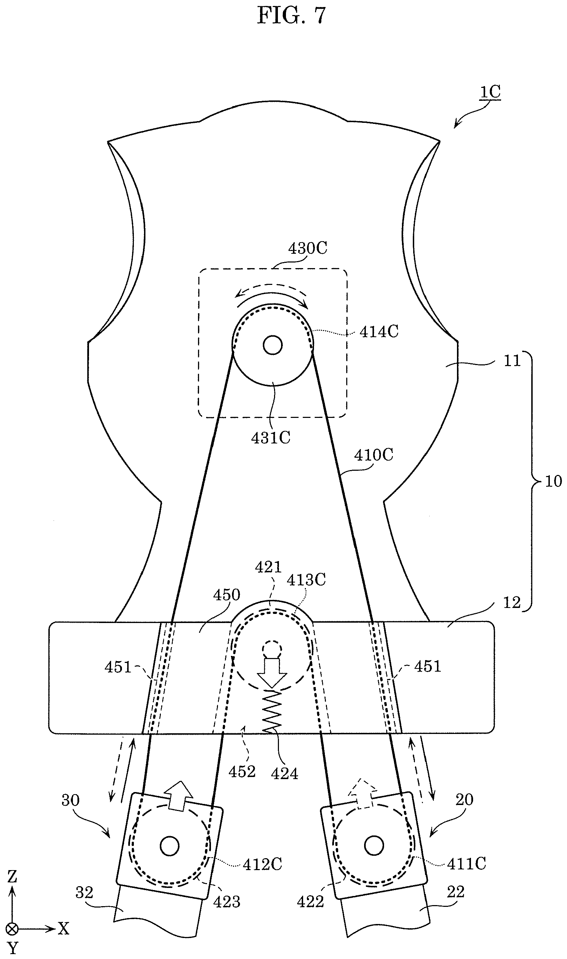

A movement assistance device according to Embodiment 4 will be described with reference to FIG. 7.

### [4-1. Configuration]

FIG. 7 is a view of a movement assistance device according to Embodiment 4 seen from behind.

Movement assistance device 1C according to Embodiment 4 is different from movement assistance device 1 according to Embodiment 1 in the configurations of first power transmitter 410C and actuator 430C. Moreover, movement assistance device 1C according to Embodiment 4 is also different from movement assistance device 1 according to Embodiment 1 in that a plurality of guide mechanisms 440 are not included. Specifically, first power transmitter 410C has a loop shape. First power transmitter 410C includes first portion 411C wound around second sliding mechanism 422, second portion 412C wound around third sliding mechanism 423, and third portion 413C which is a portion between first portion 411C and second portion 412C and which is wound around first sliding mechanism 421.

Actuator 430C includes pulley 431C which is rotated by a motor in a first rotational direction and a second rotational direction which is opposite to the first rotational direction. The first rotational direction is the rotational direction indicated by the solid arrow in FIG. 7. The second rotational direction is the rotational direction indicated by the dotted arrow in FIG. 7. Fourth portion 414C of loop-shaped first power transmitter 410C is wound around pulley 431C. Fourth portion 414C is a portion of first power transmitter 410C, between first portion 411C and second portion 412C, and is opposite to third portion 413C.

### [4-2. Operation]

In movement assistance device 1C configured as described above, when pulley 431C of actuator 430C is rotated in the first rotational direction, third sliding mechanism 423 fixed to third fitting member 30 is pulled upward. Hence, it is possible to assist the movement in the direction in which the wearer kicks the left leg rearward, that is, the direction in which the wearer extends the left leg by the hip joint. At the same time, since first power transmitter 410C is wound out relative to second sliding mechanism 422 fixed to second fitting member 20, the wearer is capable of easily moving the right leg forward, that is, moving the right leg in the direction in which the right leg is bent by the hip joint.

In contrast, when pulley 431C of actuator 430C is rotated in the second rotational direction, second sliding mechanism 422 fixed to second fitting member 20 is pulled upward. Hence, it is possible to assist the movement in the direction in which the wearer kicks the right leg rearward, that is, the movement in which the right leg is extended by the hip joint. At the same time, since first power transmitter 410C is wound out relative to third sliding mechanism 423 fixed to third fitting member 30, the wearer is capable of easily moving the left leg forward, that is, moving the left leg in the direction in which the left leg is bent by the hip joint.

In this way, by alternately switching the rotational direction of actuator 430C between the first rotational direction and the second rotational direction, it is possible to alternately assist the movement in which the wearer kicks one of the right leg and the left leg. Accordingly, it is possible to assist the wearer to walk.

### (Other Embodiments)

In movement assistance devices 1, and 1A to 1C according to Embodiments 1 to 4 described above, actuators 430, 430A, 430B, and 430C are realized by motors. However, the present disclosure is not limited to such examples. Actuators 430, 430A, 430B, and 430C may be realized by other actuators, such as artificial muscle, winding by a spring, a hydraulic cylinder, or a gas cylinder. When other actuators described above are used for actuator 430C, it may be configured that two actuators are used, and that one of the two actuators is connected to a first end of a power transmitter and the other one is connected to a second end of the power transmitter.

Movement assistance device 1 according to Embodiment 1 includes guide mechanisms 440 and 450, but the present disclosure is not limited to such an example. Movement assistance device 1 does not have to include guide mechanisms 440 and 450. In contrast, no guide mechanism is included in Embodiments 2 and 3 described above, but the guide mechanism may be included.

Movement assistance device 1 according to Embodiment 1 includes guide mechanisms 440 and 450, but does not have to include guide mechanisms 440 and 450. Only one guide mechanism may be included.

Movement assistance devices 1 and 1A to 1C according to Embodiments 1 to 4 described above are worn by the wearer on the torso and both legs. However, the present disclosure is not limited to such an example. Movement assistance devices 1 and 1A to 1C may be worn by the wearer on the torso and both arms, or on the palms or wrist and two fingers.

In the above embodiments, the portion referred to as the first end or the second end may be a portion on the first end side or a portion on the second end side, and is not strictly limited to the end.

### INDUSTRIAL APPLICABILITY

The present disclosure is useful, for example, as a movement assistance device which is capable of assisting a plurality of parts of the body of the wearer at the same time.

### REFERENCE MARKS IN THE DRAWINGS

- 1, 1A to 1C: movement assistance device
- 10, 10A: first fitting member
- 11: shoulder belt
- 12: waist belt
- 20: second fitting member
- 21: leg belt
- 22: extension belt
- 30: third fitting member
- 31: leg belt
- 32: extension belt
- 40, 40A, 40B: power mechanism
- 410, 410A to 410C: first power transmitter
- 411, 411A to 411C: first portion
- 412, 412A to 412C: second portion
- 413, 413A to 413C: third portion
- 414: first end
- 414A: second power transmitter
- 414C: fourth portion
- 415: second end
- 415A: first end
- 416A: second end
- 421, 421A, 421B: first sliding mechanism
- 422: second sliding mechanism
- 423: third sliding mechanism
- 424: spring
- 430, 430A to 430C: actuator
- 431, 431A: motor
- 431C: pulley
- 432, 432A, 433: pulley
- 440, 450: guide mechanism
- 441: support
- 442: protrusion
- 443: through-hole
- 451: through-hole
- 452: internal space
- 500: package

## Claims

1. A movement assistance device, comprising:
a first fitting member which is fitted onto a first part of a body of a person;
a second fitting member which is fitted onto a second part of the body, and a third fitting member which is fitted onto a third part of the body, the second part and the third part being positioned opposite to the first part across a joint; and
a power mechanism which includes a first end connected to the first fitting member and a second end connected to the second fitting member and the third fitting member, the power mechanism generating a tensile force between the first end and the second end,
wherein the power mechanism includes:
a first power transmitter connected to the second fitting member and the third fitting member, the first power transmitter having a string shape;
a first sliding mechanism which is positioned between (i) the first fitting member and (ii) the second fitting member and the third fitting member, and around which a third portion of the first power transmitter is wound, the third portion being positioned between a first portion and a second portion of the first power transmitter, the first portion being connected to the second fitting member, the second portion being connected to the third fitting member; and
an actuator which generates the tensile force one of (i) between the first sliding mechanism and the first fitting member, (ii) between at least one end of the first power transmitter and the first fitting member, and (iii) between at least one end of the first power transmitter, the second fitting member, and the third fitting member.

2. The movement assistance device according to claim 1,
wherein the power mechanism further includes:
a second sliding mechanism which is disposed in the second fitting member, and around which the first portion of the first power transmitter is wound; and
a third sliding mechanism which is disposed in the third fitting member, and around which the second portion of the first power transmitter is wound,
wherein the actuator is fixed to the first fitting member and the at least one end of the first power transmitter, and generates the tensile force between the at least one end of the first power transmitter, the second fitting member, and the third fitting member by pulling the at least one end of the first power transmitter.

3. The movement assistance device according to claim 1,
wherein the power mechanism further includes:
a second power transmitter including a first end fixed to the first sliding mechanism and a second end fixed to the actuator, the second power transmitter having a string shape,
the first power transmitter includes a first end fixed to the second fitting member and a second end fixed to the third fitting member, and
the actuator is disposed in the first fitting member, and generates the tensile force between the first sliding mechanism and the first fitting member by pulling the second end of the second power transmitter.

4. The movement assistance device according to claim 2,
wherein the power mechanism further includes:
a guide mechanism disposed between (i) the actuator and (ii) the second fitting member and the third fitting member, the guide mechanism including a through-hole through which the first power transmitter passes.

5. The movement assistance device according to claim 4,
wherein the guide mechanism includes:
a support which supports a back side of the body; and
a protrusion which protrudes from the support toward the back side, and
the through-hole passes through the protrusion in an up and down direction.

6. The movement assistance device according to claim 5,
wherein a plurality of the protrusions are aligned in the up and down direction,
each of the plurality of the protrusions includes the through-hole, and the first power transmitter passes through a plurality of the through-holes.

7. The movement assistance device according to claim 6,
wherein a plurality of the supports are aligned in the up and down direction, and
each of the plurality of the protrusions is disposed on a different one of the plurality of the supports.

8. The movement assistance device according to any one of claims 1 to 7,
wherein the first fitting member is fitted onto a torso of the body as the first part,
the second fitting member is fitted onto a right leg as the second part, and the third fitting member is fitted onto a left leg as the third part, and
the power mechanism is disposed on a back side of the body.

9. The movement assistance device according to claim 8,
wherein the first sliding mechanism is disposed on a waist of the body, and
the actuator is disposed above the first sliding mechanism.
